# EUROPEAN PATENT SPECIFICATION

(11) **EP 0 420 418 B1**
(45) Date of publication and mention of the grant of the patent: **07.02.1996**
(21) Application number: 90309533.9
(22) Date of filing: 31.08.1990
(51) Int. Cl.: H04N 5/91

(54) **Video signal noise reducing circuits**
Rauschunterdrückungsschaltungen für Videosignale
Circuits de réduction de bruit pour signaux vidéo

(30) Priority: 27.09.1989 JP 249030/89
(43) Date of publication of application: 03.04.1991
(73) Proprietor: SONY CORPORATION, Tokyo 141 (JP)
(72) Inventor: Sakamoto, Etsurou, c/o Patents Division, Shinagawa-ku, Tokyo 141 (JP)
(74) Representative: Harris, Ian Richard

(56) References cited:
- EP-A- 0 254 512
- GB-A- 2 206 012

## Description

This invention relates to video signal noise reducing circuits.

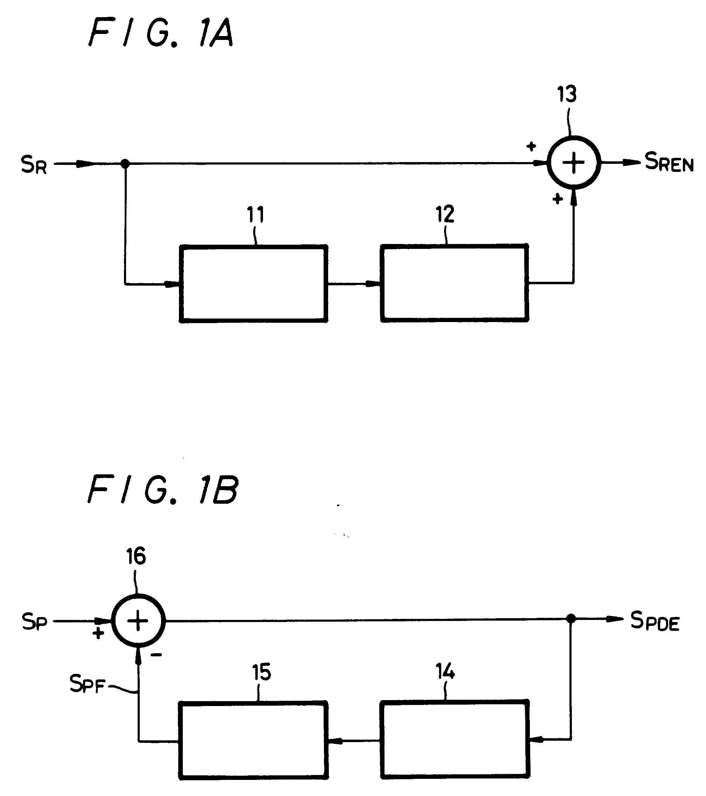

In a known video tape recorder (VTR), as shown in Figure 1A, a recording signal S_{R} is emphasized in the high band frequency range of a video signal by an emphasizing circuit formed of a high-pass filter 11 having a transfer function S₁, a limiter circuit 12 and an adder 13, and is then recorded on a video tape (not shown) or the like. On the reproducing side, as shown in Figure 1B, a reproduced signal P_{B} is de-emphasized to have the waveform of the recording video signal by a de-emphasizing circuit formed of a high-pass filter 14 having the same transfer function S₁, a limiter circuit 15 and a subtractor 16. In this way, noise in the video signal is reduced.

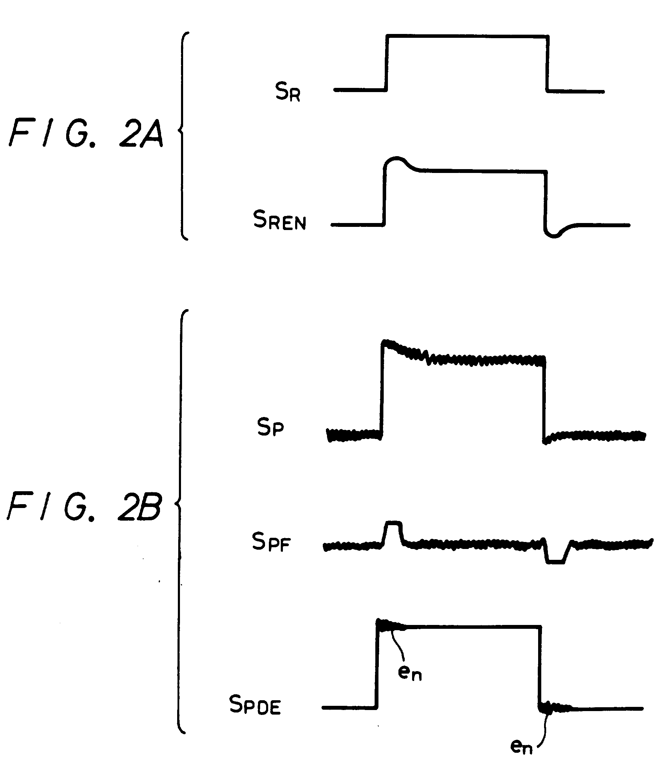

The waveform of an output signal S_{REN} from the emphasizing circuit supplied with the recording signal S_{R} is as shown in the waveform diagram of Figure 2A, wherein a signal, which results from amplitude-limiting a differentiated waveform, is added to the edge portion of the video signal where it is rapidly changed in the horizontal direction.

In the de-emphasizing circuit, a signal S_{PF}, which is provided by extracting the high band signal component of the reproduced signal, is subtracted from the reproduced signal S_{P} to provide a waveform S_{PDE} similar to that of the recording signal as shown in Figure 2B. This de-emphasizing circuit also removes a small level noise signal formed of a high band signal component.

However, if the noise removing effect is made greater by increasing the emphasis, then the amplitude-limitation of the differentiated waveform of the high-pass filter output is increased so that, when the differentiated waveform portion is limited and subtracted from the video signal by the de-emphasizing circuit, as shown in Figure 2B, a certain noise en is left on the edge portions of the video signal. This edge noise en will be described more fully below.

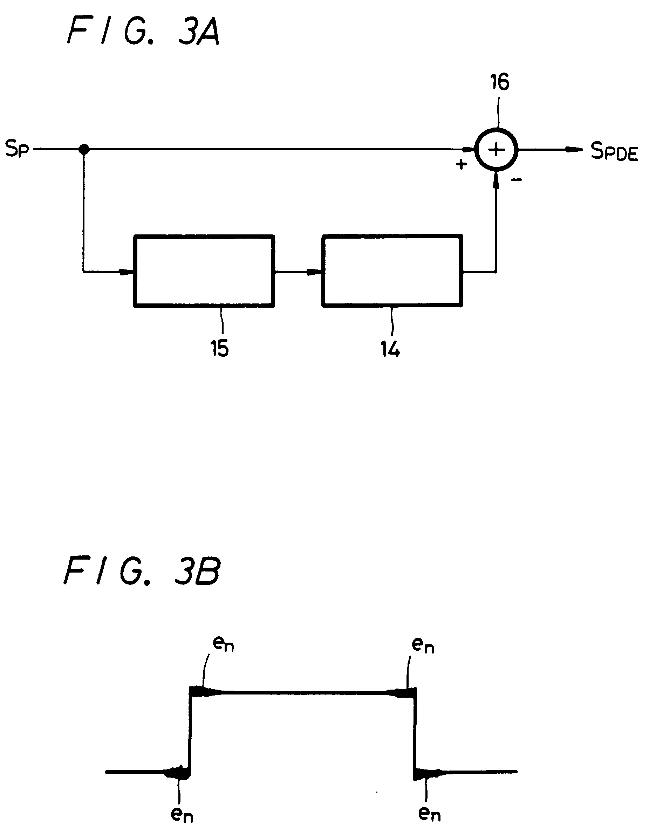

When the de-emphasizing circuit is formed of a linear phase feed-forward circuit as shown in Figure 3A, the noise en remains in the undershoot portion and peak portion as shown in Figure 3B. Then, if the amplitude-limitation of the differentiated waveform is decreased so as to reduce this edge noise en, there is then the substantial disadvantage that resolution of a video image will be deteriorated.

Such emphasizing and de-emphasizing circuits are used in GB-A-2 206 012 and in EP-A-0 254 512.

According to the present invention there is provided a noise reducing circuit for removing noise from an incoming video signal, the circuit comprising:
a high-pass filter for extracting a high band signal component of said incoming video signal;
a limiter for amplitude-limiting an output signal of said high-pass filter;
a first circuit including said high-pass filter and said limiter; characterized by
a second circuit for detecting a correlation in the vertical direction of said video signal;
weighting means for weighting an output signal of said second circuit in response to the output signal of said high-pass filter;
first calculating means for adding an output signal of said first circuit and an output signal of said weighting means; and
second calculating means for subtracting an output signal of said first calculating means and said video signal from each other.

According to the present invention there is also provided a noise reducing circuit for removing noise from an incoming video signal, the circuit comprising:
a high-pass filter for extracting a high band signal component of said incoming video signal;
a limiter for amplitude-limiting an output signal of said high-pass filter;
a first circuit including said high-pass filter and said limiter; characterized by
a second circuit for detecting a correlation in the vertical direction of said video signal;
weighting means for weighting an output signal of said second circuit in response to the output signal of said high-pass filter;
first calculating means for adding an output signal of said first circuit and an output signal of said weighting means; and
second calculating means for adding an output signal of said first calculating means and said video signal.

According to the present invention there is also provided a noise reducing apparatus for removing noise from an incoming video signal, the apparatus comprising:
an emphasizing circuit; and
a de-emphasizing circuit;
said emphasizing circuit comprising:
a first high-pass filter for extracting a high band signal component of said incoming video signal;
a first limiter for amplitude-limiting an output signal of said first high-pass filter;
a first circuit including said first high-pass filter and said first limiter;
a second circuit for detecting a correlation in the vertical direction of said incoming video signal;
first weighting means for weighting an output signal of said second circuit in response to the output signal of said first high-pass filter;
first calculating means for adding the output signal of said first circuit and the output signal of said first weighting means; and
second calculating means for adding an output signal of said first calculating means and said video signal; and
said de-emphasizing circuit comprising:
a second high-pass filter for extracting a high band signal component of the video signal processed by said emphasizing circuit;
a second limiter for amplitude-limiting an output signal of said second high-pass filter;
a third circuit including said second high-pass filter and said second limiter;
a fourth circuit for detecting a correlation in the vertical direction of said video signal;
second weighting means for weighting an output signal of said fourth circuit in response to the output signal of said second high-pass filter;
third calculating means for adding an output signal of said third circuit and an output signal of said second weighting means; and fourth calculating means for subtracting an output signal of said third calculating means from said video signal.

The invention will now be described by way of example with reference to the accompanying drawings, throughout which like parts are referred to by like references, and in which:
Figure 1A is a schematic diagram showing an example of a known emphasizing circuit;
Figure 1B is a schematic diagram showing an example of a known de-emphasizing circuit;
Figures 2A and 2B are waveform diagrams of signals in the circuits of Figures 1A and 1B, respectively;
Figure 3A is a schematic diagram showing another example of a known de-emphasizing circuit;
Figure 3B is a waveform diagram of a signal in the circuit of Figure 3A;
Figure 4 is a block diagram of an embodiment of noise reducing circuit according to the present invention;
Figure 5 is a block diagram showing a practical example of a transversal filter used in Figure 4;
Figure 6 is a waveform diagram of signals in the circuit of Figure 4; and
Figure 7 is a block diagram showing an equivalent circuit of an emphasizing circuit corresponding to the noise reducing circuit of Figure 4.

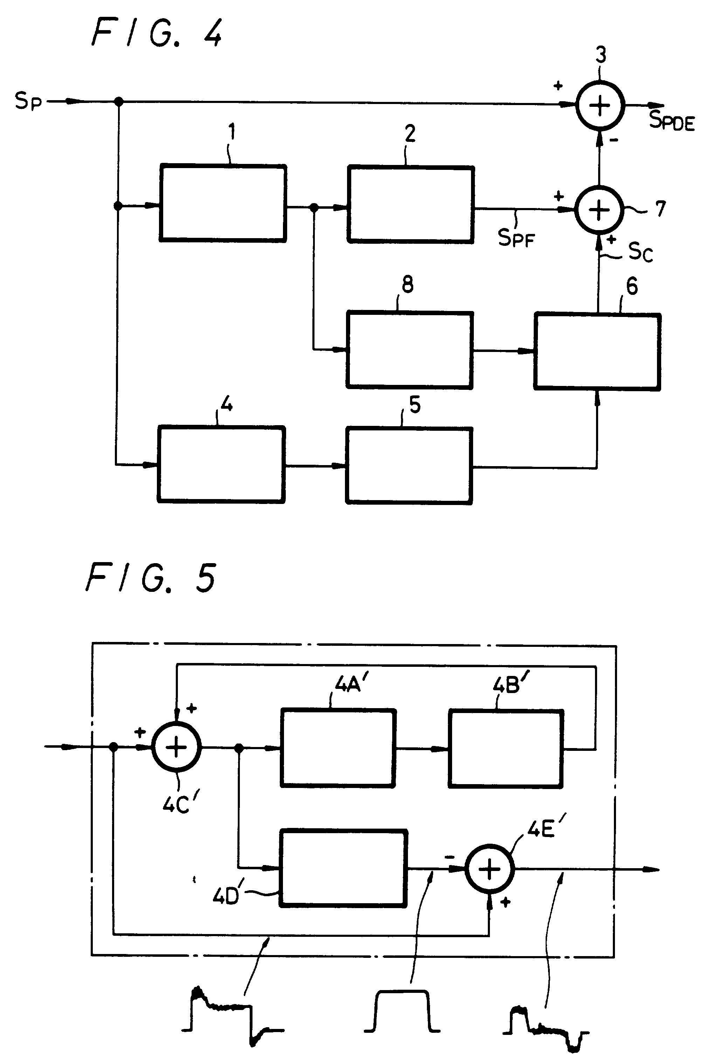

In the embodiment of noise reducing circuit shown in Figure 4, a high-pass filter 1 has a transfer function S_{H1}, and a first limiter circuit 2 has a coefficient K_{H1}. The first limiter circuit 2 might be a limiting circuit having a non-linear characteristic.

Preferably, the high-pass filter 1 and the first limiter circuit 2 have a transfer function and coefficient corresponding to the emphasis of the incoming video signal, as will be described more fully later.

A subtractor 3 is provided, and the high-pass filter 1, the first limiter circuit 2 and the subtractor 3 form a known noise reducing circuit. Although this circuit arrangement is utilized as the de-emphasizing circuit without modification, because it has the high-pass filter characteristic corresponding to the de-emphasis of the incoming video signal, this circuit arrangement will be referred to hereinafter as the noise reducing circuit for simplicity.

As shown in Figure 4, there is provided a transversal filter 4 which includes a 1H (H represents one horizontal scanning period) delay circuit and has a high-pass filter characteristic to extract a high band signal component in the vertical direction of the incoming video signal as will be described later. An output signal of the transversal filter 4 is amplitude-limited to have a predetermined level by a second limiter circuit 5 of the next stage.

A weighting circuit 6 is provided, in which an input signal is multiplied with coefficients zero to one which change in response to the output from the high-pass filter 1. The output of the weighting circuit 6 is supplied to an adder 7. In this embodiment, the output of the high-pass filter 1 is supplied through an absolute value generating circuit 8 to the weighting circuit 6.

Figure 5 shows more in detail an example of the transversal filter 4 which comprises coefficient generators 4A' and 4D', a 1H delay circuit 4B′, an adder 4C' and a subtractor 4E'.

The circuit of Figure 5 represents one portion of a vertical de-emphasizing circuit, wherein a high band signal component provided when the video signal is changed in the vertical direction on the picture screen is extracted in the output of the subtractor 4E′. This high band signal component is supplied through the second limiter circuit 5 and the weighting circuit 6 to the adder 7, and is further fed to the subtractor 3, thereby removing the edge noise that cannot be perfectly removed by the high-pass filter 1 and the first limiter circuit 2 which form a horizontal de-emphasizing circuit.

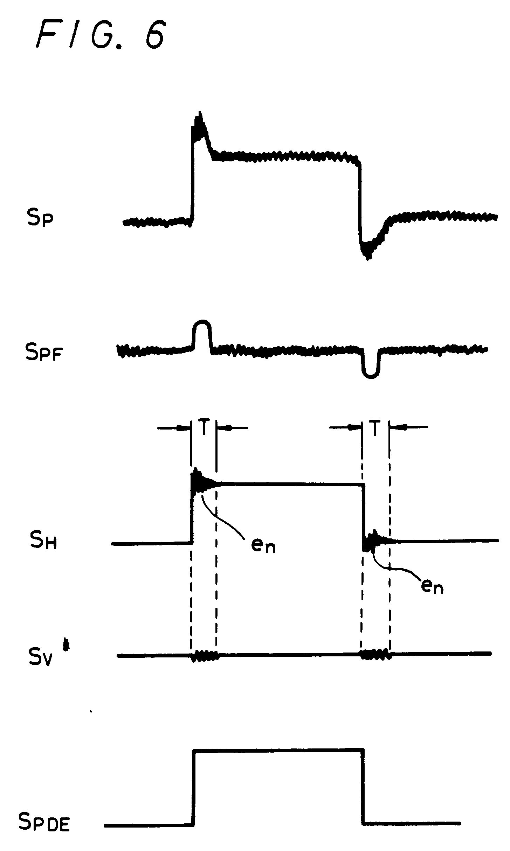

The operation of the noise reducing circuit of Figure 4 will be described with reference to the waveform diagram of Figure 6.

When the video signal in which the high band frequency component is emphasized is reproduced to provide the video signal S_{P}, and this video signal S_{P} is supplied to the noise reducing circuit, the high band signal S_{PF} of low level is extracted by the high-pass filter 1 and the first limiter circuit 2 as known. This high band signal component S_{PF} is supplied through the adder 7 to the subtractor 3, whereby the high band signal component is removed from the reproduced signal S_{P}. Thus, when the de-emphasis is performed, the noise can be removed simultaneously.

When the output from the high-pass filter 1 is small, or when the video signal has no edge portion in which the level is changed rapidly, the coefficient of the weighting circuit 6 is near zero, so that the circuit system of the transversal filter 4 is disabled.

When the output from the high-pass filter 1 is large, or during the period T in which the video signal has an edge portion in which the level is changed rapidly, as represented by the waveform S_{H} in Figure 6, the noise en remains in the output of the subtractor 3 in that edge portion.

However, with the present noise reducing circuit, the coefficient of the weighting circuit 6 becomes close to one at that edge portion, so that the signal of high band frequency detected by the transversal filter 4 and indicating the level change in the vertical direction, that is, the noise component is supplied through the adder 7 to the subtractor 3 as shown in Figure 4. Then, in the portion which rapidly changes in the horizontal direction, there remains a noise similar to the extracted noise as shown by S_{V} in Figure 6. The extracted noise S_{V} is supplied to the subtractor 3, in which these noises cancel each other out to remove the noise en remaining in the video signal. In other words, this noise reducing circuit is also operated as the vertical de-emphasizing circuit at the edge portion in which the level of the video signal is rapidly changed in the horizontal direction, thereby removing the noise in the horizontal edge portion of the video signal.

As set out above, in this noise reducing circuit, when the level change of the video signal is small, the horizontal de-emphasizing circuit formed of the high-pass filter 1 and the first limiter circuit 2 is operated, and the noise is reduced by this circuit system. If the level of the video signal is rapidly changed in the horizontal direction, then the output of the high-pass filter 1 is increased and the vertical de-emphasizing circuit formed of the transversal filter 4 and the second limiter circuit 5 is actuated, whereby such noise is removed by the comb-filter characteristic of this de-emphasizing circuit, so the reproduced signal S_{PDE} with the noise reduced is always obtained in the output of the subtractor 3.

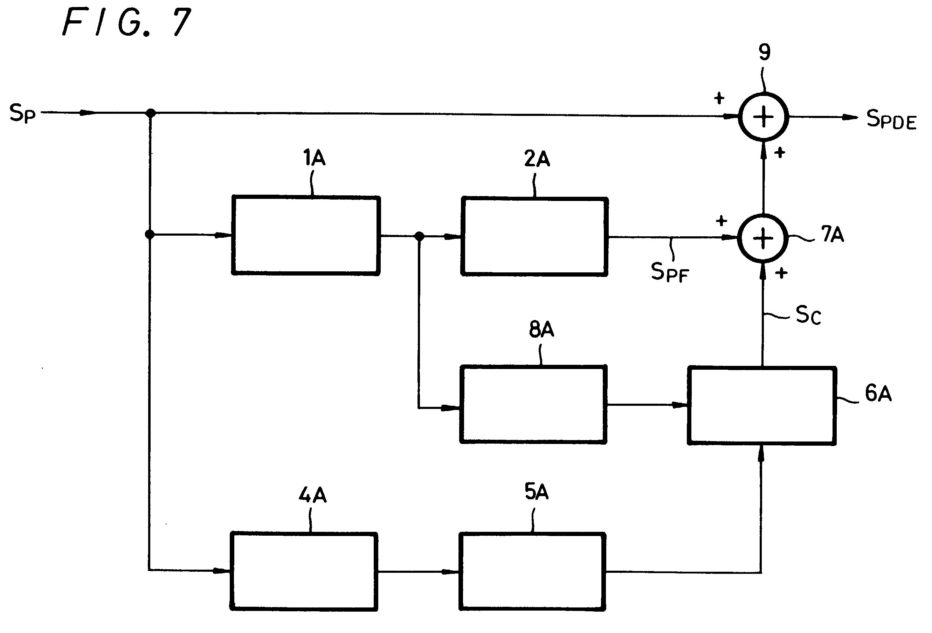

Figure 7 shows an emphasizing circuit which emphasizes beforehand the high band signal component of the recording video signal, because the noise reducing circuit of Figure 4 is operated as the de-emphasizing circuit.

In the emphasizing circuit of Figure 7, the portions performing the same functions as those of the portions of the circuit of Figure 4 are marked with the same references having reference letters A attached thereto, and the subtractor 3 in Figure 4 is replaced with an adder 9 in Figure 7.

A transfer function S_{H2} of a high-pass filter 1A and a coefficient K_{H2} of a first limiter circuit 2A are determined so as to satisfy the following equation in response to the transfer function S_{H1} of the high-pass filter 1 and the coefficient KH1 of the first limiter circuit 2 of Figure 4:${\text{(1 + S}}_{\text{H1}} {\text{· K}}_{\text{H1}} {\text{) (1 - S}}_{\text{H2}} {\text{· K}}_{\text{H2}} \text{)≒ 1}$ where the coefficient k of the weighting circuit 6 is zero.

In like manner, a transfer function S_{V2} of a transversal filter 4A and a coefficient K_{V2} of a second limiter circuit 5A are determined so as to satisfy the following equation in response to the transfer function S_{V1} of the transversal filter 4 and the coefficient K_{V1} of the second limiter circuit 5 as:${\text{(1 + S}}_{\text{V1}} {\text{· K}}_{\text{V1}} {\text{) (1 - S}}_{\text{V2}} {\text{· K}}_{\text{V2}} \text{) ≒ 1}$

If the transfer functions are determined as described above, then the circuits of Figures 7 and 4 function as the frequency compensating circuits in the recording and reproducing systems of the video tape recorder, and can also reduce the noise of the recording signal simultaneously.

Alternatively, a transversal filter of other circuit arrangement is used, and an amplitude limiter having a non-linear characteristic is utilized as the limiter circuit, whereby the de-emphasizing circuit may be modified into a non-linear de-emphasizing circuit.

As set forth above, the noise reducing circuit comprises the first circuit for detecting the horizontal high band signal component of small amplitude and the second circuit for extracting the vertical high band frequency of the video signal to perform the horizontal de-emphasizing function and the vertical de-emphasizing function so that, when the edge portion is detected in the horizontal direction of the video signal, the vertical de-emphasizing circuit is operated. Therefore, it is possible to reduce the high band edge noise which tends to occur when the video signal is emphasized.

## Claims

1. A noise reducing circuit for removing noise from an incoming video signal, the circuit comprising:
a high-pass filter (1) for extracting a high band signal component of said incoming video signal;
a limiter (2) for amplitude-limiting an output signal of said high-pass filter (1);
a first circuit (1, 2) including said high-pass filter (1) and said limiter (2); characterized by:
a second circuit (4, 5) for detecting a correlation in the vertical direction of said video signal;
weighting means (6) for weighting an output signal of said second circuit (4, 5) in response to the output signal of said high-pass filter (1);
first calculating means (7) for adding an output signal of said first circuit (1, 2) and an output signal of said weighting means (6); and second calculating means (3) for subtracting an output signal of said first calculating means (7) and said video signal from each other.

2. A circuit according to claim 1 wherein said second circuit (4, 5) includes a transversal filter (4) for extracting a high band component of said video signal and second limiter (5) for amplitude-limiting an output signal of said transversal filter (4).

3. A circuit according to claim 1 wherein said first circuit (1, 2) processes a horizontal signal component of said video signal.

4. A circuit according to claim 1 further comprising an absolute value generating circuit (8) which supplies said weighting circuit (6) with the output signal from said high-pass filter (1).

5. A circuit according to any one of the preceeding claims utilized as a de-emphasizing circuit.

6. A circuit according to any one of the preceeding claims wherein said limiter (2) has a non-linear characteristic.

7. A noise reducing circuit for removing noise from an incoming video signal, the circuit comprising:
a high-pass filter (1A) for extracting a high band signal component of said incoming video signal;
a limiter (2A) for amplitude-limiting an output signal of said high-pass filter (1A);
a first circuit (1A, 2A) including said high-pass filter (1A) and said limiter (2A); characterized by:
a second circuit (4A, 5A) for detecting a correlation in the vertical direction of said video signal;
weighting means (6A) for weighting an output signal of said second circuit (4A, 5A) in response to the output signal of said high-pass filter (1A);
first calculating means (7A) for adding an output signal of said first circuit (1A, 2A) and an output signal of said weighting means (6A); and second calculating means (9) for adding an output signal of said first calculating means (7A) and said video signal.

8. A circuit according to claim 7 wherein said second circuit (4A, 5A) includes a transversal filter (4A) for extracting a high band component of said video signal, and a second limiter (5A) for amplitude-limiting an output of said transversal filter (4A).

9. A circuit according to claim 7 wherein said first circuit (1A, 2A) processes a horizontal signal component of said video signal.

10. A circuit according to claim 7 further comprising an absolute value generating circuit (8A) which supplies said weighting means (6A) with the output signal of said high-pass filter (1A).

11. A circuit according to any one of claims 7 to 10 utilized as an emphasizing circuit.

12. A circuit according to any one of claims 7 to 10 wherein said limiter (2A) has a non-linear characteristic.

13. A noise reducing apparatus for removing noise from an incoming video signal, the apparatus comprising:
an emphasizing circuit (Figure 7); and
a de-emphasizing circuit (Figure 4);
said emphasizing circuit comprising:
a first high-pass filter (1A) for extracting a high band signal component of said incoming video signal;
a first limiter (2A) for amplitude-limiting an output signal of said first high-pass filter (1A);
a first circuit (1A, 2A) including said first high-pass filter (1A) and said first limiter (2A);
a second circuit (4A, 5A) for detecting a correlation in the vertical direction of said incoming video signal;
first weighting means (6A) for weighting an output signal of said second circuit (4A, 5A) in response to the output signal of said first high-pass filter (1A);
first calculating means (7A) for adding the output signal of said first circuit (1A, 2A) and the output signal of said first weighting means (6A); and
second calculating means (9) for adding an output signal of said first calculating means (7A) and said video signal; and
said de-emphasizing circuit comprising:
a second high-pass filter (1) for extracting a high band signal component of the video signal processed by said emphasizing circuit;
a second limiter (2) for amplitude-limiting an output signal of said second high-pass filter (1);
a third circuit (1, 2) including said second high-pass filter (1) and said second limiter (2);
a fourth circuit (4, 5) for detecting a correlation in the vertical direction of said video signal;
second weighting means (6) for weighting an output signal of said fourth circuit (4, 5) in response to the output signal of said second high-pass filter (1);
third calculating means (7) for adding an output signal of said third circuit (1, 2) and an output signal of said second weighting means (6); and
fourth calculating means (3) for subtracting an output signal of said third calculating means (7) from said video signal.

14. An apparatus according to claim 13 wherein said emphasizing circuit is utilized in a recording system of a video tape recorder and said de-emphasizing circuit is utilized in a reproducing system of said video tape recorder.

## Patentansprüche

1. Rauschunterdrückungsschaltung zur Beseitung von Rauschen aus einem ankommenden Videosignal,
mit einem Hochpaßfilter (1) zum Extrahieren einer Hochband-Signalkomponente aus dem ankommenden Videosignal,
mit einem Begrenzer (2) zur Amplitudenbegrenzung des Ausgangssignals des Hochpaßfilters (1),
und mit einer ersten Schaltung (1, 2), die das Hochpaßfilter (1) und den Begrenzer (2) enthält,
**gekennzeichnet durch**
eine zweite Schaltung (4, 5) zur Detektierung einer Korrelation des Videosignals in vertikaler Richtung,
eine Gewichtungseinrichtung (6) zur Gewichtung des Ausgangssignals der zweiten Schaltung (4, 5) nach Maßgabe des Ausgangssignals des Hochpaßfilters (1),
eine erste Recheneinrichtung (7) zum Addieren des Ausgangssignals der ersten Schaltung (1, 2) und des Ausgangssignals der Gewichtungseinrichtung (6) und
eine zweite Recheneinrichtung (3) zum Subtrahieren des Ausgangssignals der ersten Recheneinrichtung (7) und des Videosignals voneinander.

2. Schaltung nach Anspruch 1, bei der die zweite Schaltung (4, 5) ein Transversalfilter (4) zum Extrahieren einer Hochband-Signalkomponente aus dem Videosignal und einen zweiten Begrenzer (5) zur Amplitudenbegrenzung des Ausgangssignals des Transversalfilters (4) enthält.

3. Schaltung nach Anspruch 1, bei der die erste Schaltung (1, 2) eine horizontale Signalkomponente des Videosignals verarbeitet.

4. Schaltung nach Anspruch 1 mit einer Absolutwert-Generatorschaltung (8), die der Gewichtungsschaltung (6) das Ausgangssignal des Hochpaßfilters (1) zuführt.

5. Schaltung nach einem der vorhergehenden Ansprüche in der Verwendung als Deemphasis-Schaltung.

6. Schaltung nach einem der vorhergehenden Ansprüche, bei der der Begrenzer (2) eine nichtlineare Kennlinie besitzt.

7. Rauschunterdrückungsschaltung zur Beseitung von Rauschen aus einem ankommenden Videosignal,
mit einem Hochpaßfilter (1A) zum Extrahieren einer Hochband-Signalkomponente aus dem ankommenden Videosignal,
mit einem Begrenzer (2A) zur Amplitudenbegrenzung des Ausgangssignals des Hochpaßfilters (1A),
und mit einer ersten Schaltung (1A, 2A), die das Hochpaßfilter (1A) und den Begrenzer (2A) enthält,
**gekennzeichnet durch**
eine zweite Schaltung (4A, 5A) zur Detektierung einer Korrelation des Videosignals in vertikaler Richtung,
eine Gewichtungseinrichtung (6A) zur Gewichtung des Ausgangssignals der zweiten Schaltung (4A, 5A) nach Maßgabe des Ausgangssignals des Hochpaßfilters (1A),
eine erste Recheneinrichtung (7A) zum Addieren des Ausgangssignals der ersten Schaltung (1, 2A) und des Ausgangssignals der Gewichtungseinrichtung (6A) und
eine zweite Recheneinrichtung (9) zum Addieren des Ausgangssignals der ersten Recheneinrichtung (7A) und des Videosignals.

8. Schaltung nach Anspruch 7, bei der die zweite Schaltung (4A, 5A) ein Transversalfilter (4A) zum Extrahieren einer Hochband-Signalkomponente aus dem Videosignal und einen zweiten Begrenzer (5A) zur Amplitudenbegrenzung des Ausgangssignals des Transversalfilters (4A) enthält.

9. Schaltung nach Anspruch 7, bei der die erste Schaltung (1A, 2A) eine horizontale Signalkomponente des Videosignals verarbeitet.

10. Schaltung nach Anspruch 7 mit einer Absolutwert-Generatorschaltung (8), die der Gewichtungsschaltung (6A) das Ausgangssignal des Hochpaßfilters (1A) zuführt.

11. Schaltung nach einem der Ansprüche 7 bis 10 in der Verwendung als Deemphasis-Schaltung.

12. Schaltung nach einem der Ansprüche 7 bis 10, bei der der Begrenzer (2A) eine nichtlineare Kennlinie besitzt.

13. Rauschunterdrückungseinrichtung zur Beseitung von Rauschen aus einem ankommenden Videosignal,
wobei die Einrichtung aufweist:
eine Emphasis-Schaltung (Fig. 7) und
eine Deemphasis-Schaltung (Fig. 4),
wobei die Emphasis-Schaltung aufweist:
ein erstes Hochpaßfilter (1A) zum Extrahieren einer Hochband-Signalkomponente aus dem ankommenden Videosignal,
einen ersten Begrenzer (2A) zur Amplitudenbegrenzung des Ausgangssignals des ersten Hochpaßfilters (1A),
eine erste Schaltung (1A, 2A), die das erste Hochpaßfilter (1A) und den ersten Begrenzer (2A) enthält,
eine zweite Schaltung (4A, 5A) zur Detektierung einer Korrelation des Videosignals in vertikaler Richtung,
eine erste Gewichtungseinrichtung (6A) zur Gewichtung des Ausgangssignals der zweiten Schaltung (44, 5A) nach Maßgabe des Ausgangssignals des ersten Hochpaßfilters (1A),
eine erste Recheneinrichtung (7A) zum Addieren des Ausgangssignals der ersten Schaltung (1A, 2A) und des Ausgangssignals der ersten Gewichtungseinrichiung (6A) und
eine zweite Recheneinrichtung (9) zum Addieren des Ausgangssignals der ersten Recheneinrichtung (7A) und des Videosignals,
und wobei die Deemphasis-Schaltung aufweist:
ein zweites Hochpaßfilter (1) zum Extrahieren einer Hochband-Signalkomponente aus dem von der Emphasis-Schaltung verarbeiteten Videosignal,
einen zweiten Begrenzer (2) zur Amplitudenbegrenzung des Ausgangssignals des zweiten Hochpaßfilters (1),
eine dritte Schaltung (1, 2), die das Hochpaßfilter (1) und den Begrenzer (2) enthält, eine vierte Schaltung (4, 5) zur Detektierung einer Korrelation des Videosignals in vertikaler Richtung,
eine zweite Gewichtungseinrichtung (6) zur Gewichtung des Ausgangssignals der vierten Schaltung (4,5) nach Maßgabe des Ausgangssignals des zweiten Hochpaßfilters (1),
eine dritte Recheneinrichtung (7) zum Addieren des Ausgangssignals der dritten Schaltung (1, 2) und des Ausgangssignals der zweiten Gewichtungseinrichtung (6) und
eine vierte Recheneinrichiung (3) zum Subtrahieren des Ausgangssignals der dritten Recheneinrichtung (7) von dem Videosignal.

14. Einrichtung nach Anspruch 13, bei der die Emphasis-Schaltung in dem Aufnahmesystem eines Videorekorders und die Deemphasis-Schaltung in dem Wiedergabesystem eines Videorekorders verwendet wird

## Revendications

1. Circuit réducteur de bruit pour éliminer le bruit dans un signal vidéo d'entrée, le circuit comprenant:
- un filtre passe-haut (1) pour extraire une composante de signal à bande haute dudit signal vidéo d'entrée;
- un limiteur (2) pour limiter en amplitude le signal de sortie dudit filtre passe-haut (1);
- un premier circuit (1, 2) comprenant ledit filtre passe-haut (1) et ledit limiteur (2),
caractérisé par:
- un deuxième circuit (4, 5) pour détecter une corrélation dans la direction verticale dudit signal vidéo;
- des moyens de pondération (6) pour pondérer le signal de sortie dudit deuxième circuit (4, 5) en réponse au signal de sortie dudit filtre passe-haut (1);
- des premiers moyens de calcul (7) pour additionner le signal de sortie dudit premier circuit (1, 2) et le signal de sortie desdits moyens de pondération (6) ; et
- des deuxièmes moyens de calcul (3) pour soustraire le signal de sortie desdits premiers moyens de calcul (7) et ledit signal vidéo l'un de l'autre.

2. Circuit selon la revendication 1, dans lequel ledit deuxième circuit (4, 5) comprend un filtre transversal (4) pour extraire une composante à bande haute dudit signal vidéo et un deuxième limiteur (5) pour limiter en amplitude le signal de sortie dudit filtre transversal (4).

3. Circuit selon la revendication 1, dans lequel ledit premier circuit (1, 2) traite une composante de signal horizontal dudit signal vidéo.

4. Circuit selon la revendication 1, comprenant en outre un circuit générateur de valeur absolue (8) qui fournit audit circuit de pondération (6) le signal de sortie dudit filtre passe-haut (1).

5. Circuit selon l'une quelconque des revendications précédentes, utilisé comme circuit de désaccentuation.

6. Circuit selon l'une quelconque des revendications précédentes, dans lequel ledit limiteur (2) a une caractéristique non linéaire.

7. Circuit réducteur de bruit pour éliminer le bruit d'un signal vidéo d'entrée, le circuit comprenant:
- un filtre passe-haut (1A) pour extraire une composante de signal à bande haute dudit signal vidéo d'entrée;
- un limiteur (2A) pour limiter en amplitude le signal de sortie dudit filtre passe-haut (1A);
- un premier circuit (1A, 2A) comprenant ledit filtre passe-haut (1A) et ledit limiteur (2A),
caractérisé par:
- un deuxième circuit (4A, 5A) pour détecter une corrélation dans la direction verticale dudit signal vidéo;
- des moyens de pondération (6A) pour pondérer le signal de sortie dudit deuxième circuit (4A, 5A) en réponse au signal de sortie dudit filtre passe-haut (1A);
- des premiers moyens de calcul (7A) pour additionner le signal de sortie dudit premier circuit (1A, 2A) et le signal de sorite desdits moyens de pondération (6A); et
- des deuxièmes moyens de calcul (9) pour additionner le signal de sortie desdits premiers moyens de calcul (7A) et ledit signal vidéo.

8. Circuit selon la revendication 7, dans lequel ledit deuxième circuit (4A, 5A) comprend un filtre transversal (4A) pour extraire une composante à bande haute dudit signal vidéo, et un deuxième limiteur (5A) pour limiter en amplitude le signal de sortie dudit filtre transversal (4A).

9. Circuit selon la revendication 7, dans lequel ledit premier circuit (1A, 2A) traite une composante de signal horizontal dudit signal vidéo.

10. Circuit selon la revendication 7, comprenant en outre un circuit générateur de valeur absolue (8A) qui fournit auxdits moyens de pondération (6A) le signal de sortie dudit filtre passe-haut (1A).

11. Circuit selon l'une quelconque des revendications 7 à 10, utilisé comme circuit de préaccentuation.

12. Circuit selon l'une quelconque des revendications 7 à 10, dans lequel ledit limiteur (2A) a une caractéristique non linéaire.

13. Dispositif réducteur de bruit pour éliminer le bruit d'un signal vidéo d'entrée, le dispositif comprenant:
- un circuit de préaccentuation (figure 7); et
- un circuit de désaccentuation (figure 4),
ledit circuit de préaccentuation comprement:
- un premier filtre passe-haut (1A) pour extraire une composante de signal à bande haute dudit signal vidéo d'entrée;
- un premier limiteur (2A) pour limiter en amplitude le signal de sortie dudit premier filtre passe-haut (1A);
- un premier circuit (1A, 2A) comprenant ledit filtre passe-haut (1A) et ledit premier limiteur (2A);
- un deuxième circuit (4A, 5A) pour détecter une corrélation dans la direction verticale dudit signal vidéo d'entrée;
- des premiers moyens de pondération (6A) pour pondérer le signal de sortie dudit deuxième circuit (4A, 5A) en réponse au -signal de sortie dudit premier filtre passe-haut (1A);
- des premiers moyens de calcul (7A) pour additionner le signal de sortie dudit premier circuit (1A, 2A) et le signal de sortie desdits premiers moyens de pondération (6A); et
- des deuxièmes moyens de calcul (9) pour additionner le signal de sortie desdits premiers moyens de calcul (7A) et ledit signal vidéo; et
ledit circuit de désaccentuation comprenant:
- un deuxième filtre passe-haut (1) pour extraire une composante de signal à bande haute du signal vidéo traité par ledit circuit de préaccentuation;
- un deuxième limiteur (2) pour limiter en amplitude le signal de sortie dudit deuxième filtre passe-haut (1);
- un troisième circuit (1, 2) comprenant ledit deuxième filtre passe-haut (1) et ledit deuxième limiteur (2);
- un quatrième circuit (4, 5) pour détecter une corrélation dans la direction verticale dudit signal vidéo;
- des deuxièmes moyens de pondération (6) pour pondérer le signal de sortie dudit quatrième circuit (4, 5) en réponse au signal de sortie dudit deuxième filtre passe-haut (1);
- des troisièmes moyens de calcul (7) pour additionner le signal de sortie dudit troisième circuit (1, 2) et le signal de sortie desdits deuxièmes moyens de pondération (6); et
- des quatrièmes moyens de calcul (3) pour soustraire le signal de sortie desdits troisièmes moyens de calcul (7) dudit signal vidéo.

14. Dispositif selon la revendication 13, dans lequel ledit circuit de préaccentuation est utilisé dans un système d'enregistrement d'un magnétoscope, et ledit circuit de désaccentuation est utilisé dans un système de reproduction dudit magnétoscope.
